# EUROPÄISCHE PATENTSCHRIFT

(11) **EP 3 487 719 B1**
(45) Veröffentlichungstag und Bekanntmachung des Hinweises auf die Patenterteilung: **30.06.2021**
(21) Anmeldenummer: 18746903.6
(22) Anmeldetag: 25.07.2018
(51) Int. Cl.: B60H 3/06, B01D 39/16, B01D 46/00

(54) **LÜFTUNGSANLAGE UND KRAFTFAHRZEUG**
VENTILATION SYSTEM AND MOTOR VEHICLE
INSTALLATION DE VENTILATION ET VÉHICULE AUTOMOBILE

(30) Priorität: 26.07.2017 EP 17183356
(43) Veröffentlichungstag der Anmeldung: 29.05.2019
(73) Patentinhaber: Sono Motors GmbH, 80935 München (DE)
(72) Erfinder: CHRISTIANS, Jona, 80809 München (DE); HAHN, Laurin, 81373 München (DE); MILLER, Vitalij, 84032 Landshut (DE); SEIFERT, Maximilian, 81377 München (DE)
(74) Vertreter: Qip Patentanwälte Dr. Kuehn & Partner mbB
(86) Internationale Anmeldenummer: PCT/EP2018/070237
(87) Internationale Veröffentlichungsnummer: WO 2019/020721

(56) Entgegenhaltungen:
- DE-A1-102014 004 740
- DE-T5-112015 002 274
- US-A1- 2006 005 711

## Beschreibung

Die Erfindung betrifft eine Lüftungsanlage für einen Innenraum eines Kraftfahrzeugs. Weiterhin betrifft die Erfindung ein Kraftfahrzeug mit solcher Lüftungsanlage.

Mit einer Lüftungsanlage eines Kraftfahrzeugs kann in dessen Innenraum für ein angenehmes Raumklima gesorgt werden, insbesondere durch Belüftung und/oder Temperierung. Zu diesem Zweck erzeugt die Lüftungsanlage üblicherweise einen Luftstrom. Gerade wenn hierfür jedoch Luft von außerhalb des Innenraums des Kraftfahrzeugs angesaugt wird, können durch den Luftstrom unerwünschte Fremdkörper und Schadstoffe in den Innenraum des Kraftfahrzeugs eingetragen werden. Dazu gehören beispielsweise Pollen und Staub. Um dies zu verhindern, sind Lüftungsanlagen von Kraftfahrzeugen meistens mit einem Filter ausgestattet, welcher diese Fremdkörper und Schadstoffe wenigstens teilweise aus dem Luftstrom vor Einleiten in den Innenraum heraus filtert.

DE 10 2014 004740 A1 beschreibt einen Luftfilter für eine Belüftungseinrichtung eines Kraftwagens. US 2006/005711 A1 beschreibt einen ersetzbaren Filter für eine Klimaanlage eines Fahrzeugs. DE 11 2015 002274 T5 beschreibt eine Lüftungseinheit für eine Fahrzeug-Klimaanlage.

Aufgabe der vorliegenden Erfindung ist es, eine Lüftungsanlage für einen Innenraum eines Kraftfahrzeugs zu schaffen, welche ein besonders angenehmes Innenraumklima für die jeweiligen Insassen des Kraftfahrzeugs erzeugen kann. Weiterhin ist es Aufgabe der vorliegenden Erfindung, ein Kraftfahrzeug mit solcher Lüftungsanlage zu schaffen, wobei in dem Innenraum des Kraftfahrzeugs ein besonders angenehmes Innenraumklima für die jeweiligen Insassen erzeugt werden kann.

Diese Aufgaben werden erfindungsgemäß durch den Gegenstand der Patentansprüche 1 und 15. gelöst. Vorteilhafte Ausgestaltungen mit zweckmäßigen Weiterbildungen der Erfindung sind in den Unteransprüchen 2-14 angegeben, wobei vorteilhafte Ausgestaltungen der Lüftungsanlage als vorteilhafte Ausgestaltungen des Kraftfahrzeugs anzusehen sind.

Ein erster Aspekt der Erfindung betrifft eine Lüftungsanlage für einen Innenraum eines Kraftfahrzeugs gemäß dem unabhängigen Anspruch 1.

Die Luftfiltervorrichtung kann wenigstens eine Moospflanze und/oder eine Flechtenpflanze als natürliches, filterndes Medium umfassen. Vorliegend wird davon ausgegangen, dass in den häufigsten Anwendungsformen eine Mehrzahl von Moosen und/oder Pflanzen vorgesehen werden. Deswegen wird im Folgenden häufig der Einfachheit halber im Plural von Moosen und/oder Flechten gesprochen, wobei auch Ausführungsformen mit nur einem Moos und/oder einer Flechte, insbesondere nur einer einzelnen Moospflanze und/oder einer einzelnen Flechtenpflanze mit eingeschlossen sind.

Als natürliches, filterndes Medium kann insbesondere eine natürliche Flechte, insbesondere eine nach besonderen ökologischen Standards angebaute Flechte, vorzugsweise eine Flechtenpflanze vorgesehen sein. Das natürliche, filternde Medium umfasst dabei vorzugsweise komplette Pflanzen oder Pflanzenteile, d.h. Flechten und/oder Moose, die nicht als Ausgangswerkstoff in ein neues und/oder anderes Material weiterverarbeitet wurden, wie dies beispielsweise bei Pflanzen und/oder Bäumen für Cellulosefilterpapiere der Fall ist. Es kann sich also gewissermaßen um die Moose und/oder Flechten "an sich" handeln. Im erfindungsgemäßen filternden Medium kann z. B. eine natürliche Makrostruktur (wie etwa eine strauchförmige Verästelung) der Flechte und/oder des Mooses im Wesentlichen oder vollständig erhalten sein, wobei die Makrostruktur optional zur Verbesserung der Filterwirkung verdichtet und/oder komprimiert sein kann. So kann etwa im Falle einer Flechtenpflanze z. B. der natürliche Vegetationskörper der Flechte, also insbesondere ein Geflecht aus Pilzfäden (Hyphen), im filternden Medium erhalten sein.

Moose und/oder Flechten können als alternatives Filtermaterial zu konventionellen Filtermaterialien, wie beispielsweise Cellulose- oder Kunststofffiltern, dienen. Im Gegensatz zu solchen konventionellen Filtermaterialien können Moose und/oder Flechten das Raumklima zusätzlich dadurch verbessern, indem sie - je nach Luftfeuchtigkeit - Feuchtigkeit aus dem Luftstrom und/oder der Innenluft absorbieren oder an den Luftstrom und/oder die Innenluft abgeben können. Dadurch kann eine Feuchtigkeitsregulierung bereitgestellt werden, welche ohne zusätzliche Komponenten, wie beispielsweise einen Luftbefeuchter, auskommt. Dadurch kann das Innenraumklima besonders angenehm sein. Außerdem können Moose und/oder Flechten sogenannten Feinstaub besonders gut aus der Luft filtern.

Darüber hinaus sind Moose und/oder Flechten kostengünstig in der Natur als natürlicher Rohstoff ohne weitere umfangreiche Verarbeitung verfügbar und sind in der Entsorgung besonders unbedenklich. Darüber hinaus kommt es auch bei der Herstellung zu keiner oder nur einer geringfügigen Umweltbelastung. Dass die Moose und/oder Flechten ein natürliches, filterndes Medium darstellen, kann insbesondere bedeuten, dass die Moose und/oder Flechten als solche als filterndes Medium eingesetzt werden. Insbesondere werden die Moose und/oder Flechten nicht umfangreich chemisch und/oder mechanisch weiterverarbeitet, um ein anderes Material bereitzustellen. Beispielsweise werden die Moose und/oder Flechten nicht verarbeitet, um Cellulose und/oder Papier als Filter herzustellen. Moose und/oder Flechten können also direkt als natürliches, filterndes Medium eingesetzt werden, und dienen nicht als Ausgangsstoff zur Weiterverarbeitung in ein (anderes) Filtermaterial.

Zusätzlich können Moose und/oder Flechten eine Geräuschentwicklung im Innenraum des Kraftfahrzeugs aufgrund eines Luftstroms besonders gut dämpfen. Beispielsweise können auch jeweilige Turbulenzen im Luftstrom beim Durchströmen eines natürlichen, filternden Mediums reduziert werden.

Die Haltevorrichtung kann beispielsweise insgesamt dazu ausgebildet sein, lösbar im oder am Kraftfahrzeug befestigt zu werden. Dafür kann die Haltevorrichtung beispielsweise eine Steck-, Schnapp-, Klett- oder Schraubverbindung umfassen. Die Haltevorrichtung kann beispielsweise durch einen verformbaren Formschluss lösbar an dem Kraftfahrzeug gehalten sein. Alternativ oder zusätzlich kann das Halteelement ein Mittel zum lösbaren Verbinden aufweisen, wie beispielsweise eine Steckverbindung, eine Schnappverbindung, eine Klettverbindung oder eine Schraubverbindung und damit lösbar befestigt sein, beispielsweise an einem Gehäuse. Andere Teile der Haltevorrichtung können dann bei einem Lösen und Demontieren des Halteelements im Kraftfahrzeug verbleiben. Die Haltevorrichtung und/oder das Halteelement kann werkzeuglos im Fahrzeug montierbar und/oder demontierbar sein.

Es kann somit möglich sein, die an dem Halteelement gehaltenen Flechten und/oder Moose gemeinsam mit dem Halteelement aus der Lüftungsanlage zu nehmen. Dadurch kann das filternde Medium, welches in diesem Falle auch als Filter oder Filterpatrone bezeichnet werden kann, einfach aus der Lüftungsanlage für Wartungszwecke entnommen werden. So kann das natürliche, filternde Medium schnell und einfach ausgetauscht werden, wenn es eine bestimmte Menge von Partikeln aus der Luft gefiltert hat und seine Aufnahmekapazität erreicht hat, weshalb es gereinigt oder ausgetauscht werden sollte.

Vorzugsweise ist der Luftkanal im Betrieb der Lüftungsanlage wenigstens zeit- und bereichsweise mit Luft durchströmt. Entsprechend sind im Betrieb die Luftfiltervorrichtung der Lüftungsanlage und damit auch die Moose und/oder Flechten vorzugsweise wenigstens zeit- und bereichsweise mit Luft durchströmt. Dabei kann Luft von außerhalb des Innenraums nach innerhalb des Innenraums des Kraftfahrzeugs befördert werden. Alternativ oder zusätzlich kann auch ein Umluftbetrieb vorgesehen sein, wobei dann nur Luft im Innenraum des Kraftfahrzeugs umgewälzt wird und dabei vorzugsweise ebenfalls das filternde Medium zur Reinigung bzw. Filterung überströmt und/oder durchströmt. Das filternde Medium selber kann in einem Teilbereich des Luftkanals gehalten sein. Alternativ oder zusätzlich kann das filternde Medium mittels des Halteelements aber auch so gehalten sein, dass es von einem aus dem Luftkanal entströmenden Luftstrom durch- und/oder überströmt wird. Stromabwärts und stromaufwärts können in der Lüftungsanlage durch den Luftstrom definiert sein. Beispielsweise kann ein Lufteinlass stromaufwärts des filternden Mediums sein und ein Luftauslass im Innenraum stromabwärts des filternden Mediums.

Die Lüftungsanlage kann mehrere filternde Medien mit einer Vielzahl von Moosen und/oder Flechten aufweisen. Dabei können unterschiedliche Pflanzensorten verwendet werden. Beispielsweise kann an einer Luftansaugung der Lüftungsanlage eine Flechtensorte vorgesehen sein, welche besonders effizient den Eintritt von größeren Fremdkörpern wie Zweigen oder Blättern in die Lüftungsanlage verhindert. Kurz vor einem Luftauslass der Lüftungsanlage kann dagegen eine Flechtensorte vorgesehen sein, welche besonders effizient Pollen und Feinstaub aus dem Luftstrom reinigt und/oder besonders gut die Luftfeuchtigkeit regulieren kann.

Die Moose und/oder Flechten können verdichtet und/oder komprimiert sein. Vorzugsweise kann die Luftfiltervorrichtung mehrere Lagen von Moosen und/oder Flechten umfassen. Diese können dabei gegeneinander komprimiert werden, beispielsweise indem diese mit Aufbringen einer gewissen Kraft zusammengedrückt an dem Halteelement angeordnet werden und anschließend in dieser zusammengedrückten Lage von dem Halteelement gehalten werden. Eine besonders hohe Komprimierung ermöglicht eine besonders gute Filterleistung, insbesondere auf kleinem Raum. Eine weniger hohe Komprimierung ermöglicht dagegen, dass der Luftstrom das filternde Medium mit wenig Widerstand einfach passieren kann und somit die Lüftungsanlage besonders wenig Leistung zum Erzeugen des Luftstroms benötigt.

Eine Komprimierung des natürlichen, filternden Mediums kann durch ein Volumen definiert werden, welches das Medium einnimmt. Beispielsweise können lose in einem Behälter geschüttete Flechten ein Volumen von 1 Liter einnehmen. Eine Komprimierung auf die Hälfte des Volumens, mit damit einhergehender Verdichtung der Flechten gegeneinander, kann beispielsweise dazu führen, dass die komprimierten Flechten nun ein Volumen von lediglich 1/2 Liter einnehmen. Hierbei kann beispielsweise auch von einer zweifachen Verdichtung gesprochen werden. Bei einer dreifachen Verdichtung nehmen die Flechten entsprechend beispielsweise nur noch 1/3 Liter Volumen ein. Die Moose und/oder Flechten können auf 2/3 ihres Ausgangsvolumens oder weniger, 1/2 ihres Ausgangsvolumens oder weniger, oder 1/3 ihres Ausgangsvolumens oder weniger verdichtet sein. Werden die Moose und/oder Flechten z. B. als teppichartiges Medium zur Verfügung gestellt, können diese beispielsweise mindestens zweifach oder mindestens dreifach verdichtet sein. Bei ungefähr dreifacher Verdichtung wird eine hohe Filterleistung bei gleichzeitig nur geringfügiger Strömungsbehinderung erzielt.

Die Lüftungsanlage kann zudem auch mehrere Luftkanäle, einen Klappenkasten und/oder eine Vorrichtung zum Erzeugen eines Luftstroms aufweisen, wie beispielsweise einen Ventilator. Der Klappenkasten kann beispielsweise zum Steuern des Luftstroms ausgebildet sein. Die Vorrichtung zum Erzeugen des Luftstroms der Lüftungsanlage kann steuerbar sein und somit eine Regelung des Luftstroms im Luftkanal ermöglichen. Diese Funktion kann aber auch zusätzlich oder alternativ vom Klappenkasten übernommen werden. Der Strömungserzeuger, wie beispielsweise ein Ventilator, kann vom Motor des Kraftfahrzeugs angetrieben werden. Alternativ oder zusätzlich kann der Luftstrom aber auch durch eine Fahrzeugbewegung selbst erzeugt werden, wofür beispielsweise ein sogenannter Ram Air-Einlass an einer Front des Kraftfahrzeugs vorgesehen sein kann. Die Lüftungsanlage kann als Klimaanlage ausgebildet sein und/oder auch eine Heizung umfassen.

Die Lüftungsanlage kann so ausgebildet sein, dass das filternde Medium, insbesondere jeweilige Flechten, in der Lüftungsanlage überbrückt werden können. D.h. es kann vorgesehen sein, dass beispielsweise mittels eines Klappenkastens der Lüftungsanlage ein Bypass mit dem Luftstrom versorgt wird, so dass kein Luftstrom mehr durch das natürliche, filternde Medium strömt. Dadurch kann beispielsweise verhindert werden, dass bei besonders kalten und/oder besonders heißen Luftstromtemperaturen das natürliche, filternde Medium angeströmt wird und dabei beschädigt wird bzw. eine Lebensdauer reduziert wird. Die Überbrückung kann dabei in Abhängigkeit von Temperatur und/oder Luftfeuchtigkeit steuerbar sein. Dafür kann die Lüftungsanlage vorzugsweise einen Luftfeuchtigkeits- und/oder einen Temperatursensor umfassen, welcher vorzugsweise im Luftkanal angeordnet ist. Zudem kann die Lüftungsanlage dafür eine entsprechende Steuerungsvorrichtung umfassen. Alternativ oder zusätzlich kann die Lüftungsanlage so ausgebildet sein, dass ein Insasse nach Wunsch eine Durchströmung und eine Überbrückung des filternden Mediums durch die Steuerungsvorrichtung veranlassen kann.

Vorzugsweise ist die Haltevorrichtung dazu ausgebildet, die Moose und/oder Flechten im Armaturenbrett und/oder im oder an anderen Verkleidungselementen des Innenraums des Kraftfahrzeugs anzuordnen. Bevorzugt sind die Moose und/oder Flechten in einem Sichtbereich des Kraftfahrzeuginnenraums angeordnet. Das kann bedeuten, dass das natürliche, filternde Medium und/oder die Haltevorrichtung wenigstens teilweise für die jeweiligen Insassen des Innenraums des Kraftfahrzeugs sichtbar sind. Vorzugsweise ist das natürliche, filternde Medium besonders nah am Luftauslass der Lüftungsanlage im Innenraum angeordnet, um so die Luftfeuchtigkeit im Innenraum besonders gut regulieren zu können.

In weiterer vorteilhafter Ausgestaltung der erfindungsgemäßen Lüftungsanlage ist es vorgesehen, dass das Halteelement wenigstens eine Aussparung und/oder wenigstens eine Öffnung aufweist, in der die Flechten und/oder Moose gehalten sind. Beispielsweise kann das Halteelement einen Schlitz aufweisen, in welchem ein Teilbereich der Flechten und/oder Moose gehalten ist, wobei insbesondere jeweilige Schlitze des Halteelements konisch zulaufend oder gerade sind. Der in der wenigstens einen Aussparung und/oder wenigstens einen Öffnung (z. B. den Schlitzen) gehaltene Teilbereich der Flechten und/oder Moose ist beispielsweise ein stilförmiger Bereich, wie beispielsweise ein Wurzelbereich und/oder ein Stämmchen der jeweiligen Pflanzen.

Alternativ oder zusätzlich können Moose und/oder Flechten auch auf einem oder mehreren flexiblen Elementen und/oder dreidimensionalen Substraten befestigt werden, beispielsweise durch Aufkleben. Das oder die flexiblen Elemente können dabei auch als Flexelemente bezeichnet werden und als Trägerschicht ausgebildet sein. Diese flexiblen Elemente mit den darauf aufgeklebten Moosen und/oder Flechten können auf eine benötigte Größe zurechtgeschnitten werden, beispielsweise entsprechend einer Fläche des Halteelements. Die Kombination aus aufgeklebten Moosen und/oder Flechten und dem flexiblen Element kann auch als teppichartiges, natürliches, filterndes Medium bezeichnet werden. Das flexible Element kann dabei dazu ausgebildet sein, mit Luft durchströmt zu werden, oder die Luft kann parallel zu einer Haupterstreckungsfläche des flexiblen Elements durch die Moose und/oder Flechten strömen. Das flexible Element kann beispielsweise ein Filzwerkstoff umfassen oder aus einem Filzwerkstoff bestehen. Das flexible Element kann schalldämmende Eigenschaften aufweisen und flammhemmend behandelt sein. Somit ergibt sich ein flexibles, schalldämmendes, weitestgehend wartungsfreies, flammhemmendes und leicht zuschneidbares teppichartiges, natürliches, filterndes Medium. Beispielsweise kann ein Zuschnitt des teppichartigen, filternden Mediums mittels eines doppelseitigen Klebebands auf einen Schenkel eines L-förmigen Profils als Halteelement aufgeklebt werden. Das doppelseitige Klebeband kann dabei mitsamt dem teppichartigen Filtermaterial einfach von dem Profil zum Lösen des filternden Materials mit diesem abgezogen werden. Dabei ist ersichtlich, dass das flexible Element auch das Halteelement sein kann. Genauso kann das Halteelement auch als das flexible Element ausgebildet sein. Gegebenenfalls verbleibende Klebereste sind dabei unproblematisch, diese können einfach von einem Ersatz des filternden Mediums wieder überklebt werden.

Alternativ oder zusätzlich kann das teppichartige, natürliche, filternde Medium und/oder ein dreidimensionales Substrat auch beispielsweise mittels eines Klettverschlusses an dem Halteelement oder anderen Trägerelementen lösbar befestigt werden. Das Halteelement selber kann auch aus einer Klettverschlussverbindung bestehen, wobei eine Seite des Klettverschlusses fahrzeugseitig befestigt ist und eine andere Seite des Klettverschlusses mit den Moosen und/oder Flechten, insbesondere dem teppichartigen Medium, verbunden ist. Die Haken eines fahrzeugseitigen Klettverschlusses können unter Umständen auch direkt mit dem teppichartigen Medium in Eingriff treten. Weitere Beispiele für eine alternative Verbindung sind Druccknopfverbindungen, mittels welchen beispielsweise das teppichartige Medium angeknöpft werden kann.

Durch die Verwendung eines dreidimensionalen Substrats und/oder durch Aufbringen eines flexiblen Elements auf einer dreidimensionalen Struktur (z.B. einer dreidimensionalen Fläche) des Halteelements kann die Anordnung der Flechte und/oder des Mooses besonders gut an die jeweiligen Strömungsverhältnisse und/oder den jeweiligen Einbauraum angepasst werden. So können mehrere Flechtenpflanzen und/oder mehrere Moose bei Verwendung eines solchen dreidimensionalen Substrats und/oder bei Befestigung auf einer solchen dreidimensionalen Struktur des Halteelements beispielsweise über mindestens einen gebogenen Abschnitt angeordnet sein (z.B. über einen Abschnitt eines Zylindermantels, etwa einen Abschnitt von mindestens 120° oder mindestens 180°). Das dreidimensionale Substrat und/oder die dreidimensionale Struktur des Halteelements kann tubusförmig sein. Die Verwendung eines solchen Substrats bietet sich unter anderem im Bereich einer Mittelkonsole an.
Es kann vorgesehen sein, dass mehrere Pflanzenbüschel pro Halteelement und/oder auch pro Aussparung oder Öffnung des Halteelements (also insbesondere pro Schlitz) vorgesehen sind. Beispielsweise können mehrere Flechtenpflanzen in einem Schlitz befestigt werden. Die Flechten und/oder Moose können aber auch vorher bereits als einheitliches natürliches, filterndes Medium vorbereitet werden. Beispielsweise kann eine Art Flechtenteppich erzeugt werden, bei dem mehrere Flechtenpflanzen miteinander verbunden sind und/oder bei welchem eine Flechte durch einen entsprechenden Zuschnitt einen großflächigen Raum in der Art eines Teppichs einnimmt. Dabei kann ein zusätzlicher Träger vorgesehen sein, welcher die Flechte in dieser Form hält, beispielsweise ein Filz-Backer. Ein teppichartiges filterndes Medium kann beispielsweise in zwei Schlitzen des Haltelements eingespannt sein, so dass es in einer Lage fixiert ist.

Ein gerader Schlitz kann insbesondere eine gleichmäßige Breite aufweisen. Dabei kann ein gerader Schlitz in einem Endbereich fertigungsbedingt jeweilige Rundungen aufweisen. Ein gerader Schlitz ist besonders kostengünstig zu fertigen. Ein konischer Schlitz ist insbesondere ein zulaufender Schlitz, bei welchem sich von einem Ende zu einem anderen Ende die Breite verringert. Ein konischer und/oder sich verjüngender Schlitz ist besonders geeignet, das Naturprodukt in Form der Moose oder Flechten zu halten, welche als natürliches, filterndes Medium verwendet werden, da bei einem Naturprodukt dessen Dicke nur mit hohem Aufwand standardisiert werden kann. Beispielsweise kann jede einzelne Flechtenpflanze einen leicht unterschiedlichen Stammdurchmesser aufweisen. Entsprechend kann das natürliche, filternde Medium besonders leicht an dem Halteelement mit konischen Schlitzen befestigt werden. Bei einer Vielzahl von Schlitzen sind dabei auch Mischformen mit verschieden geformten Schlitzen möglich. Vorzugsweise sind die Schlitze mindestens 5 mm, mindestens 10 mm oder mindestens 15 mm voneinander beabstandet. Alternativ oder zusätzlich kann der Abstand der Schlitze 45 mm oder weniger, 40 mm oder weniger, 35 mm oder weniger, oder 25 mm oder weniger betragen. Die Schlitze können z. B. ca. 20 mm voneinander beabstandet sein. Die Schlitze sind vorzugsweise mindestens 0,5 mm, stärker bevorzugt mindestens 1 mm breit. Alternativ oder zusätzlich können die Schlitze weniger als 5 mm, weniger als 4 mm oder weniger als 3 mm breit sein. Die Schlitze können z. B. ca. 1 - 2 mm breit sein. Statt Schlitzen kann das Halteelement auch beispielsweise entsprechende Nute aufweisen.

Alternativ oder zusätzlich kann das natürliche, filternde Medium auch an dem Halteelement aufgeklebt, eingespannt, angeschraubt oder anderweitig befestigt werden. Insbesondere eine teppichartig zur Verfügung gestellte Flechte kann besonders leicht aufgeklebt, eingespannt und/oder angeschraubt werden. Hierbei kann auch auf Schlitze im Halteelement verzichtet werden, wobei beispielsweise dann lediglich eine korrespondierende Befestigungsfläche am Halteelement zur Verfügung gestellt wird. Das Halteelement ist so besonders einfach konstruiert und damit kostengünstig herstellbar.

Die Haltevorrichtung und/oder das Halteelement kann z.B. in einem Armaturenbrett oder in einer Mittelkonsole vorgesehen sein.

In weiterer vorteilhafter Ausgestaltung der erfindungsgemäßen Lüftungsanlage ist vorgesehen, dass die Haltevorrichtung, insbesondere wenigstens ein Teil des Halteelements, wenigstens einen Teil einer Wandung des Luftkanals der Lüftungsanlage bildet. Dadurch kann das natürliche, filternde Medium besonders gut in der Lüftungsanlage integriert werden. Eine solche Anordnung ist zudem besonders bauraumsparend. Beispielsweise kann die Haltevorrichtung, insbesondere das Halteelement, einen Teil der Wandung eines Luftauslasses der Lüftungsanlage bilden.

In weiterer vorteilhafter Ausgestaltung der erfindungsgemäßen Lüftungsanlage ist vorgesehen, dass die Haltevorrichtung ein im Wesentlichen geschlossenes Gehäuse für das filternde Medium bildet, welches wenigstens eine Lufteinlassöffnung und eine Luftauslassöffnung aufweist. Die Lufteinlassöffnung und die Luftauslassöffnung können dabei zum Durchströmen eines Innenraums des Gehäuses mit einem Luftstrom der Lüftungsanlage genutzt werden. Beim Durchströmen des Gehäuses durch das Gehäuse kann besonders gut sichergestellt werden, dass ein besonders großer Anteil des Luftstroms das natürliche, filternde Medium tatsächlich durchströmt und auch von diesem gefiltert wird. Das Gehäuse kann dabei vorzugsweise wenigsten einen Teil des Lüftungskanals bilden. Durch das Vorsehen eines Gehäuses kann das natürliche, filternde Medium besonders einfach ausgetauscht werden, indem beispielsweise dieses lösbare Verbindungen mit dem Kraftfahrzeug, insbesondere einem Armaturenbrett oder einer Mittelkonsole aufweist. Es kann auch vorgesehen werden, dass das natürliche, filternde Medium zusammen mit dem Gehäuse ausgetauscht wird, so dass es bei einer Wartung nicht zu einer Verunreinigung der Lüftungsanlage und/oder des Innenraums des Kraftfahrzeugs mit von dem natürlichen, filternden Medium aufgenommenen Partikeln kommen kann.

Vorzugsweise kann die Luftauslassöffnung des geschlossenen Gehäuses als Luftauslass der Lüftungsanlage im Innenraum des Kraftfahrzeugs ausgebildet sein, so dass auf einige Zusatzelemente, wie Ausströmdüsen, verzichtet werden kann. Das Halteelement kann selbst Teil des Gehäuses sein, was dann bedeuten kann, dass die Moose und/oder Flechten einfach in dem Innenraum des Gehäuses bzw. Halteelements zu deren Halterung aufgenommen worden sind. Alternativ kann das Halteelement auch als separates Teil in oder an dem Gehäuse angeordnet sein. Dann kann zu Wartungszwecken das natürliche, filternde Medium zusammen mit dem Halteelement aus dem Gehäuse entnommen werden. Das Gehäuse kann auch als Flechten- oder Moosgehäuse bezeichnet werden.

In weiterer vorteilhafter Ausgestaltung der erfindungsgemäßen Lüftungsanlage ist es vorgesehen, dass die Haltevorrichtung wenigstens ein Gehäuseelement und ein transparentes und/oder transluzentes Abdeckelement umfasst, welche jeweils wenigstens einen Teil des Gehäuses für das Moos bilden. Das transluzente und/oder transparente Abdeckelement kann dabei ein Einsehen in einen Innenraum des Gehäuses ermöglichen, um so beispielsweise den Zustand und/oder einen Verschmutzungsgrad des natürlichen, filternden Mediums ohne eine Demontage überprüfen zu können. So kann beispielsweise frühzeitig ein natürlicher Zersetzungsprozess des filternden Mediums, beispielsweise ein Verrotten, erkannt werden, um den Filter rechtzeitig auszutauschen. Das Gehäuseelement kann dabei jeweilige Öffnungen für einen Lufteinlass und/oder einen Luftauslass des Gehäuses umfassen. Alternativ oder zusätzlich kann beispielsweise auch eine Öffnung zwischen dem Abdeckelement und dem Gehäuseelement als Lufteinlass oder Luftauslass vorgesehen sein, was fertigungstechnisch besonders günstig ist. Das Halteelement kann dabei auch als Gehäuseelement selbst oder Teil davon ausgebildet sein.

Das transparente Abdeckelement ist vorzugsweise lösbar mit dem Gehäuseelement verbunden, beispielsweise mittels einer Schnapp-, Steck- oder Schraubverbindung. Dadurch kann das Abdeckelement auch als schnell öffenbarer Verschluss für eine Wartungsöffnung der Luftfiltervorrichtung dienen. Das transparente und/oder transluzente Abdeckelement kann beispielsweise als Plexiglasabdeckung ausgebildet sein. Alternativ kann das Abdeckelement beispielsweise auch ein Glaselement sein. Das Halteelement kann bereichsweise transparent und/oder transluzent sein. Zum Beispiel kann das Halteelement zumindest bereichsweise aus Plexiglas und/oder Glas hergestellt sein (z. B. nur bereichsweise) und/oder Fensterabschnitte aus Plexiglas und/oder Glas aufweisen.

Das Gehäuseelement kann beispielsweise fest mit dem Kraftfahrzeug verbunden sein, beispielsweise mit dem Armaturenbrett oder einer Mittelkonsole (z. B. mittels einer Verschweißung). Ein Bypass für das natürliche, filternde Medium, wie dies vorstehend bereits beschrieben wurde, kann beispielsweise auch in dem Gehäuse, insbesondere in dem Gehäuseelement vorgesehen sein. Der Bypass kann dabei auch einen separaten Luftauslass in dem Innenraum des Kraftfahrzeugs bilden.

In weiterer vorteilhafter Ausgestaltung der erfindungsgemäßen Lüftungsanlage kann es vorgesehen sein, dass das Halteelement lösbar oder fixiert in oder an dem Gehäuse befestigt ist, insbesondere indem das Halteelement lösbar mit dem Gehäuseelement und/oder dem Abdeckelement verbunden ist, und/oder das Gehäuse lösbar mit anderen Teilen der Lüftungsanlage, insbesondere dem Luftkanal, verbunden ist und/oder dazu ausgebildet ist, lösbar mit dem Kraftfahrzeug verbunden zu sein. Insgesamt kann so leicht eine Austauschbarkeit des natürlichen, filternden Mediums bereitgestellt werden. Die jeweilige lösbare Verbindung kann beispielsweise als Schnapp,- Steck- oder Schraubverbindung ausgebildet sein. Die Austauschbarkeit des Filtermaterials kann durch das Halteelement standardisiert sein. Im Gegensatz zu beispielsweise einem Naturprodukt wie einer Flechte kann das Halteelement immer die gleichen Abmaße aufweisen. Entsprechend kann eine standardisierte Befestigung des Naturprodukts mittels des Halteelements bereitgestellt werden.

Durch das lösbare Verbinden am Kraftfahrzeug, insbesondere an einem Teil des Luftkanals, kann die Austauschbarkeit des natürlichen, filternden Mediums in Art einer Patrone erfolgen. D.h. das beispielsweise das gesamte Gehäuse für das natürliche, filternde Medium aus der Lüftungsanlage entnommen werden kann, vorzugsweise ohne die Demontage weiterer Teile. Bei dieser Entnahme des gesamten Gehäuses kann sichergestellt werden, dass es zu keiner Verunreinigung des Innenraums und/oder des Luftkanals durch in dem Filter aufgenommene Partikel kommt. Gleichzeitig kann so eine Modularität erreicht werden, indem das Gehäuse in unterschiedlichen Teilen und Teilbereichen des Kraftfahrzeugs, beispielsweise in unterschiedlichen Verkleidungselementen, eingesetzt werden kann. Das natürliche, filternde Medium kann je nach Einsatzbereich und/oder Einsatzbedingungen ausgetauscht werden ohne weitere konstruktive Änderungen vornehmen zu müssen. Beispielsweise können unterschiedliche Flechten für unterschiedliche klimatische Regionen und/oder unterschiedliche Jahreszeiten vorgesehen sein. Das natürliche, filternde Medium kann so auch einfach an Nutzerwünsche hinsichtlich Filterleistung, Eigengeruch und/oder Luftbefeuchtung angepasst werden.

Ist vorgesehen, dass das Halteelement beispielsweise lösbar an dem Gehäuse befestigt ist, während das Gehäuse selbst dauerhaft in dem Kraftfahrzeug fixiert ist, kann besonders einfach eine Dichtigkeit der Verbindung des Gehäuses mit den restlichen Kanälen der Lüftungsanlage sichergestellt werden. Zudem sind so jeweilige Austauschteile besonders kostengünstig und leicht, da beispielsweise nur das im Vergleich zum Gehäuse preiswerte und leichte Halteelement mit dem natürlichen, filternden Medium ausgetauscht werden kann. In diesem Fall kann das Halteelement in Art einer Patrone ausgetauscht werden.

In weiterer vorteilhafter Ausgestaltung der erfindungsgemäßen Lüftungsanlage ist es vorgesehen, dass die Luftauslassöffnung des Gehäuses als Schlitz zwischen dem Gehäuseelement und dem Abdeckelement und/oder zwischen dem Halteelement und dem Gehäuseelement und/oder Abdeckelement ausgebildet ist. Ein solcher Schlitz kann auch als Luftauslassschlitz bezeichnet werden. Vorzugsweise bildet die Luftauslassöffnung auch wenigstens einen Luftauslass der Lüftungsanlage im Innenraum. Ein Schlitz ermöglicht dabei eine Beschleunigung des Luftstroms am Luftauslass bzw. der Luftauslassöffnung nach Art einer Düse und/oder einen Luftstrom mit einem besonders großen Querschnitt bereitzustellen. Dadurch kann der Innenraum des Kraftfahrzeugs besonders gut belüftet werden. Vorzugsweise sind die Luftauslässe entlang einer dem Innenraum zugewandten Längserstreckung der Haltevorrichtung vorgesehen und die jeweiligen Lufteinlässe des Gehäuses entlang einer dem Innenraum abgewandten Längserstreckung der Haltevorrichtung. Beispielsweise können jeweilige Schlitze mit ihrer Längserstreckung in Fahrzeugquerrichtung im Armaturenbrett oder der Mittelkonsole im Innenraum angeordnet sein. Durch eine besonders große Luftauslassöffnung, d.h. besonders breite Schlitze, kann auch ein langsamer und dadurch wenig turbulenter Luftstrom in den Innenraum strömen, wodurch die Lüftungsanlage besonders leise sein kann. Hier ergibt sich insbesondere ein Synergieeffekt mit der Turbulenzminderung durch das natürliche, filternde Medium. Alternativ oder zusätzlich können jeweilige Auslassöffnungen auch als Löcher oder Bohrungen ausgebildet sein.

Der oder die Luftauslassschlitze sind vorzugsweise kleiner als ein Schlitz ausgebildet, durch welchen eine menschliche Hand passt. Der oder die Luftauslassschlitze können ein Breite und eine Länge aufweisen, wobei die Länge größer als die Breite ist. Die Breite ist vorzugsweise geringer als 1 cm, geringer als 0,8 cm oder geringer als 0,5 cm. Alternativ oder zusätzlich können aber auch vor dem Schlitz eine Blende und/oder ein Gatter vorgesehen sein, um einen Eingriff in den Innenraum des Gehäuses zu verhindern. Dadurch kann eine ungewünschte Manipulation des natürlichen, filternden Mediums verhindert werden.

In weiterer vorteilhafter Ausgestaltung der erfindungsgemäßen Lüftungsanlage ist es vorgesehen, dass das transparente und/oder transluzente Abdeckelement wenigstens einen Teil einer in Einbaulage der Lüftungsanlage dem Innenraum zugewandten Fläche des Gehäuses bildet. Das Abdeckelement kann also eine den Innenraum begrenzende Fläche bilden. Dadurch können jeweilige Moose und/oder Flechten der Luftfiltervorrichtung vom Innenraum des Kraftfahrzeugs und/oder auch von außerhalb des Kraftfahrzeugs einsehbar sein. Das transparente und/oder transluzente Abdeckelement kann somit als Teil einer Innenraumverkleidung des Kraftfahrzeugs ausgebildet sein. Ein transparenter und/oder transluzenter Teilbereich der Lüftungsanlage kann also derart angeordnet sein, dass jeweilige Moose und/oder Flechten wenigstens teilweise im Innenraum des Kraftfahrzeugs sichtbar sind. Dadurch kann erreicht werden, dass im Innenraum des Kraftfahrzeugs ein natürliches Ambiente entsteht. Jeweilige Insassen des Kraftfahrzeugs können sich durch ein solches Umfeld besonders wohlfühlen, ähnlich wie dies bei Zimmerpflanzen beispielsweise in einem Büro der Fall ist. Ebenso ist so zumindest eine optische Kontrolle des filternden Mediums ohne eine Demontage möglich.

In weiterer vorteilhafter Ausgestaltung der erfindungsgemäßen Lüftungsanlage ist es vorgesehen, dass das Halteelement als längliches Element mit V-förmigem Querschnitt ausgebildet ist, wobei Moose und/oder Flechten wenigstens teilweise in dem durch die V-Form gebildeten Innenwinkel angeordnet sind. Das Halteelement kann so kostengünstig als Blechelement oder Kunststoffleiste ausgebildet sein, insbesondere als Blechbiegeteil. Vorzugsweise hat das Halteelement dabei einen L-förmigen Querschnitt, da ein rechter Winkel besonders günstig für eine Montage des Halteelements ist. Zwei Schenkel des Halteelements bilden dann einen rechten Innenwinkel. Das Halteelement kann also zwei längliche Schenkelelemente, welche an benachbarten Kanten miteinander verbunden sind, umfassen.

In weiterer vorteilhafter Ausgestaltung der erfindungsgemäßen Lüftungsanlage ist es vorgesehen, dass das Halteelement in einem Schenkel der V-Form jeweilige Schlitze zum Halten der Moose und/oder Flechten aufweist und in einem anderen Schenkel der V-Form wenigstens eine Durchgangsöffnung zum Durchströmen eines Luftstroms durch die Moose und/oder Flechten aufweist. In dem Bereich mit der Durchgangsöffnung wird der Luftstrom vom Halteelement so besonders wenig oder gar nicht behindert während das Halteelement dennoch einfach befestigbar ist und dessen Geometrie ist so wenig komplex.

Vorzugsweise weist der Schenkel der V-Form mit der wenigstens einen Durchgangsöffnung eine Mehrzahl von Durchgangsöffnungen für eine gleichmäßige Durchströmung auf. Vorzugsweise ist dieser Schenkel wenigstens bereichsweise als Gatter oder Gitter ausgebildet. Die Durchgangsöffnung des Schenkels kann beispielsweise einem Lufteinlass des Gehäuses zugewandt sein und/oder einem Teilstück des Luftkanals stromaufwärts von dem natürlichen, filternden Medium. Wenigstens eine Luftauslassöffnung des Gehäuses, ein Luftauslass der Lüftungsanlage und/oder stromabwärtiges Teilstück des Luftkanals ist vorzugsweise in Stromrichtung gegenüberliegend des Schenkels mit der wenigstens einen Durchgangsöffnung angeordnet, insbesondere bezüglich des Innenwinkels. Die Durchgangsöffnung des Schenkels ist vorzugsweise stromaufwärts vom Filtermedium angeordnet.

Alternativ oder zusätzlich kann das Halteelement auch einen U-förmigen Querschnitt aufweisen. Dann können beispielsweise bei den zwei gegenüberliegenden Schenkeln jeweilige Schlitze vorgesehen sein, um das natürliche, filternde Medium zu befestigen. Beispielsweise kann so eine teppichartig ausgebildete Fläche zwischen den zwei Schenkeln in jeweiligen Schlitzen einfach eingespannt werden. Dann kann in der Basis des U-förmigen Querschnitts, also in dem die beiden anderen Schenkel verbindenden Schenkel, jeweilige Durchgangsöffnungen für den Luftstrom vorgesehen sein. Alternativ oder zusätzlich kann dieser Basisschenkel auch beispielsweise zur Befestigung an dem Gehäuse und/oder anderen Teilen der Lüftungsanlage vorgesehen sein, während einer der außenseitigen Schenkel wenigstens eine Durchgangsöffnung aufweist und der andere Schenkel wenigstens einen Schlitz zum Befestigen des natürlichen, filternden Mediums.

In weiterer vorteilhafter Ausgestaltung der erfindungsgemäßen Lüftungsanlage ist es vorgesehen, dass das natürliche, filternde Medium ein Islandmoos umfasst, insbesondere cladionia rangiferina. Bei dem sogenannten Islandmoos handelt es sich um eine Flechte. Vorzugsweise sind die Moose und/oder Flechten eigengeruchshemmend behandelt, beispielsweise mittels Glyzerin und/oder einer Salzlösung. Dadurch kommt es zu keiner oder nur einer geringen Geruchsveränderung des Luftstroms beim Durchströmen des natürlichen, filternden Mediums. Alternativ ist das natürliche, filternde Medium unbehandelt, um so einen natürlichen, wald- oder wiesenartigen Geruch im Innenraum des Kraftfahrzeugs zu erzeugen. Dies kann von jeweiligen Insassen des Kraftfahrzeugs als angenehm empfunden werden. Durch die Austauschbarkeit aufgrund der lösbaren Verbindung können auch unterschiedliche natürliche, filternde Medien bereitgestellt werden, die je nach Nutzerpräferenz eigengeruchshemmend behandelt sind oder nicht. Das natürliche, filternde Medium kann auch aus mehreren Islandmoospflanzen bestehen, welche gegeneinander komprimiert sind.

Als Geruchsneutralisierer zur Hemmung des Eigengeruchs des Naturprodukts als filterndes Medium eignen sich grundsätzlich Geruchshemmer. Als Geruchshemmer können beispielsweise Triethylenglycol oder Cyclodextrin-Derivate genutzt werden. Zudem kann das Naturprodukt auch mit einem Desinfektionsmittel, beispielsweise zum Hemmen von Mikroorganismen, behandelt werden. Hierfür eignet sich beispielsweise Bronopol (2-bromo-2-nitropopane-1,3-diol). Dabei ist auch eine gleichzeitige Desinfektion und geruchshemmende Behandlung möglich, beispielsweise indem die beiden dafür genutzten Stoffe miteinander vermischt werden. Die vorgenannten Verbindungen gehören dabei den organischen Verbindungen an und sind entsprechend leicht, schnell und umweltfreundlich in der Natur abbaubar und dadurch ungefährlich. Zusätzlich können bei einer geruchshemmenden und/oder Desinfektionsbehandlung des Naturproduktes auch Duftstoffe hinzugefügt werden. Beispielsweise können die Moose und/oder Flechten mit Düften von Zitrone, Orange oder anderen Früchten behandelt sein. Dabei ist es auch möglich, unterschiedlich parfümierte Moose und/oder Flechten als Filtermaterialien anzubieten.

Das natürliche, filternde Medium kann entfärbt sein, insbesondere wenn das natürliche, filternde Medium im Innenraum des Kraftfahrzeugs sichtbar ist. Dafür kann beispielsweise eine Salz- und/oder Chlorlösung genutzt werden. In diesem Fall kann das natürliche, filternde Medium dann beispielsweise eine weiße Farbe aufweisen. Das natürliche, filternde Medium kann auch entsprechend beheizt und/oder gekühlt werden, um dessen Lebensdauer zu verlängern. Diese Beheizung und/oder Kühlung kann auch durch einen Luftstrom der Lüftungsanlage bereitgestellt werden. Eine Beheizung kann aber auch beispielsweise durch Strahlungswärme bereitgestellt werden, wodurch dann der Luftstrom eine von dem natürlichen, filternden Medium weitestgehend unabhängige Temperatur aufweisen kann. Das natürliche, filternde Medium kann als lebende oder tote Pflanze in der Lüftungsanlage bereitgestellt werden. Insbesondere bei einer lebenden Pflanze kann innerhalb der Lüftungsanlage auch ein Reservoir an Wasser, Erde und/oder anderen Nährstoffen bereitgestellt werden, um dessen als Filter nutzbare Lebensdauer zu verlängern. Dieses Reservoir kann beispielsweise in dem Gehäuse vorgesehen sein, beispielsweise in Form eines Schwamms.

In weiterer vorteilhafter Ausgestaltung der erfindungsgemäßen Lüftungsanlage ist es vorgesehen, dass das Moos stromabwärts eines Klappenkastens der Lüftungsanlage und/oder stromabwärts eines zusätzlichen konventionellen Luftfilters angeordnet ist. Vorzugsweise sind dazu die Haltevorrichtung und/oder das Halteelement an einer solchen Position der Lüftungsanlage angeordnet. Durch die Anordnung stromabwärts eines Klappenkastens kann der Luftstrom bereits vor dem natürlichen, filternden Medium gesteuert werden. Dadurch ist beispielsweise das Vorsehen eines Bypasses besonders einfach möglich. Insbesondere kann so leicht verhindert werden, dass das natürliche, filternde Medium mit einem Luftstrom durchströmt wird, welcher diesen Beschädigen könnte, beispielsweise aufgrund zu hoher oder zu niedriger Temperaturen des Luftstroms. Durch das Vorsehen eines zusätzlichen konventionellen Luftfilters könnte beispielsweise das Eintreten jeweiliger Partikel in die Lüftungsanlage an einem Lufteinlass besonders gut verhindert werden. Alternativ kann diese Konfiguration auch dahingehend verstanden werden, dass eine konventionelle Lüftungsanlage mit dem natürlichen, filternden Medium aufgewertet wird. Das natürliche, filternde Medium fungiert in diesem Sinne dann als zusätzlicher Luftfilter. Alternativ oder zusätzlich kann eine erfindungsgemäße Luftfiltervorrichtung in Strömungsrichtung vor einem Klappenkasten angeordnet sein, etwa in Art und/oder anstelle eines herkömmlichen Luftfilters.

Die Luftfiltervorrichtung, insbesondere das Halteelement, kann mehrere Lamellen aufweisen, die jeweils durch ein Substrat und eine oder mehrere Moos- und/oder Flechtenpflanzen bereitgestellt sind, die auf dem Substrat angeordnet und/oder befestigt sind. Das Substrat kann plattenförmig und/oder luftdurchlässig sein. Zwischen jeweiligen Substraten können ein oder mehrere Trennelemente angeordnet sein. Diese Trennelemente können z.B. Aktivkohle aufweisen. Die Trennelement können auch aus Filterpapier und/oder Aktivkohle hergestellt sein. Die Lamellen und/oder die Trennelemente können jeweils an entgegengesetzten Enden (insbesondere an entgegengesetzten Enden in Längsrichtung) am Halteelement befestigt sein. Die erfindungsgemäße Luftfiltervorrichtung kann in diesem Fall einen herkömmlichen Filter ersetzen oder ergänzen und/oder an dessen Stelle angeordnet sein.

In weiterer vorteilhafter Ausgestaltung der erfindungsgemäßen Lüftungsanlage ist es vorgesehen, dass die Haltevorrichtung eine Beleuchtungsvorrichtung umfasst, wobei die Beleuchtungsvorrichtung insbesondere ein LED-Leuchtmittel umfasst. Mittels der Beleuchtung kann die Lebensdauer des natürlichen, filternden Mediums erhöht werden. Beispielsweise kann einer noch lebenden Pflanze so das Licht für eine Photosynthese oder andere natürliche Prozesse zur Verfügung gestellt werden. Mittels eines UV-Lichts kann auch eine Geruchshemmung und/oder eine antibakterielle Wirkung bei dem natürlichen, filternden Medium bewirkt werden. Mittels Infrarotlicht kann das natürliche, filternde Medium gewärmt werden, um so vor besonders niedrigen Temperaturen zu schützen. Mittels der Beleuchtungsvorrichtung kann auch ein beleuchtetes Raumambiente geschaffen werden, insbesondere wenn mittels der Beleuchtungsvorrichtung ein sich vom Innenraum des Kraftfahrzeugs sichtbarer Teilbereich der Lüftungsanlage beleuchtet wird. Beispielsweise kann das natürliche, filternde Medium derart in einem Gehäuse angeordnet sein, dass es vom Innenraum des Kraftfahrzeugs sichtbar ist und dann in diesem Gehäuse von der Beleuchtungsvorrichtung angestrahlt wird. Vorzugsweise ist die Beleuchtungsvorrichtung dimmbar und/oder eine Spektralverteilung des erzeugten Lichts einstellbar. Dadurch kann das natürliche, filternde Medium in unterschiedlichen Farben beleuchtet werden. Beispielsweise kann eine entfärbte und somit weiße Flechte dann mit blauem Licht angestrahlt werden, um einen blaues Innenraumambiente zu erzeugen und gleichzeitig die beruhigende Wirkung einer blauen Pflanze hervorzurufen. LED-Leuchtmittel sind dabei besonders energieeffiziente Leuchtmittel.

Ein weiterer Aspekt der Erfindung betrifft ein Kraftfahrzeug gemäß dem Anspruch 15.

Die Lüftungsanlage gemäß dem ersten Erfindungsaspekt eignet sich für eine Verwendung in dem Kraftfahrzeug gemäß dem zweiten Aspekt der Erfindung. Die sich aus der Lüftungsanlage gemäß dem ersten Erfindungsaspekt ergebenden Merkmale und Vorteile sind der Beschreibung des ersten Erfindungsaspekts zu entnehmen, wobei die vorteilhafte Ausgestaltung des ersten Erfindungsaspekts als vorteilhafte Ausgestaltung des zweiten Erfindungsaspekts anzusehen sind.

Vorzugsweise ist eine Luftauslassöffnung eines Gehäuses der Luftfiltervorrichtung durch ein Verkleidungselement des Innenraums des Kraftfahrzeugs für jeweilige Insassen des Kraftfahrzeugs kaschiert. Insbesondere kann beispielsweise ein Teilbereich des Armaturenbretts oder der Mittelkonsole über eine solche Luftauslassöffnung (insbesondere über einen Schlitz in dem Gehäuse der Luftfiltervorrichtung) überhängen, so dass diese Luftauslassöffnung (bzw. dieser Schlitz) in einer natürlichen Sitzhaltung jeweiliger Insassen des Kraftfahrzeugs nicht zu sehen ist. Optional kann der Überhang so ausgestaltet sein, dass nicht mehr in diese Luftauslassöffnung bzw. in diesen Schlitz gefasst werden kann. Jeweilige Luftauslässe der Lüftungsanlage können dabei durch Verkleidungselemente des Kraftfahrzeugs gebildet sein.

Ein weiterer Aspekt betrifft eine Lüftungsanlage, in welcher wenigstens ein Moos und/oder eine Flechte in einem Luftstrom der Lüftungsanlage angeordnet ist. Ein anderer Aspekt betrifft eine passive Luftfilterung in einem Innenraum eines Kraftfahrzeugs durch wenigstens ein Moos und/oder eine Flechte. Beispielsweise kann eine Flechte als Teil einer Innenraumverteilung eingesetzt sein. So kann beispielsweise eine B-Säule in einem Innenraum eines Kraftfahrzeugs durch eine teppichartige Flechte verkleidet sein. Dadurch kann die Luft im Innenraum des Kraftfahrzeugs passiv gefiltert werden, insbesondere indem Feinstaub von den Moosen und/oder Flechten aus der Luft absorbiert werden. Gleichzeitig entsteht so eine ökologisch anmutende Innenraumverkleidung. Zudem kann so auf Verkleidungsteile aus Kunststoff zumindest teilweise verzichtet werden und die Verkleidung ist ökologisch unbedenklich zu entsorgen.

Ein weiterer Aspekt betrifft eine Lüftungsanlage für ein Kraftfahrzeug, bei welcher wenigstens ein Wandungsbereichs eines Luftkanals mit wenigstens einem Moos und/oder einer Flechte ausgekleidet ist. Beispielsweise kann eine teppichartige Flechte an die Innenwandung eines Luftkanals einer Lüftungsanlage wenigstens bereichsweise angeklebt werden. Auch dadurch kann ein Luftstrom der Lüftungsanlage gereinigt werden. Zudem kann so eine besonders gute Geräuschdämpfung von jeweiligen Geräuschen der Lüftungsanlage erreicht werden.

Weitere Vorteile und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den beanspruchten Rahmen der Erfindung zu verlassen.
- Fig. 1: zeigt in einer perspektivischen Schnittansicht teilweise ein Armaturenbrett eines Kraftfahrzeugs mit einer Luftfiltervorrichtung einer Lüftungsanlage;
- Fig. 2: zeigt in einer Vorderansicht eine Haltevorrichtung für ein natürliches, filterndes Medium der Luftfiltervorrichtung gemäß Fig. 1;
- Fig. 3: zeigt die Haltevorrichtung gemäß Fig. 2 in einer Draufsicht;
- Fig. 4: zeigt die Haltevorrichtung gemäß Fig. 2 in einer Seitenansicht;
- Fig. 5: zeigt die Haltevorrichtung gemäß Fig. 2 in einer geschnittenen Seitenansicht;
- Fig. 6: zeigt die Haltevorrichtung gemäß Fig. 2 in einer Perspektivansicht;
- Fig. 7: zeigt die Haltevorrichtung gemäß Fig. 2 in einer Vorderansicht ohne ein Abdeckelement;
- Fig. 8: zeigt in einer Vorderansicht das Halteelement der Haltevorrichtung gemäß Fig. 2;
- Fig. 9: zeigt in einer Seitenansicht das Halteelement gemäß Fig. 8;
- Fig. 10: zeigt in einer Draufsicht das Halteelement gemäß Fig. 8;
- Fig. 11: zeigt in einer Vorderansicht ein Gehäuseelement der Haltevorrichtung gemäß Fig. 2;
- Fig. 12: zeigt das Gehäuseelement gemäß Fig. 11 in einer Draufsicht;
- Fig. 13: zeigt das Gehäuseelement gemäß Fig. 11 in einer Seitenansicht;
- Fig. 14: zeigt das Gehäuseelement gemäß Fig. 11 in einer geschnittenen Seitenansicht;
- Fig. 15: zeigt ein dreidimensionales Substrat, das auch als Halteelement Verwendung finden kann; und
- Fig. 16: zeigt eine Luftfiltervorrichtung mit mehreren Lamellen.

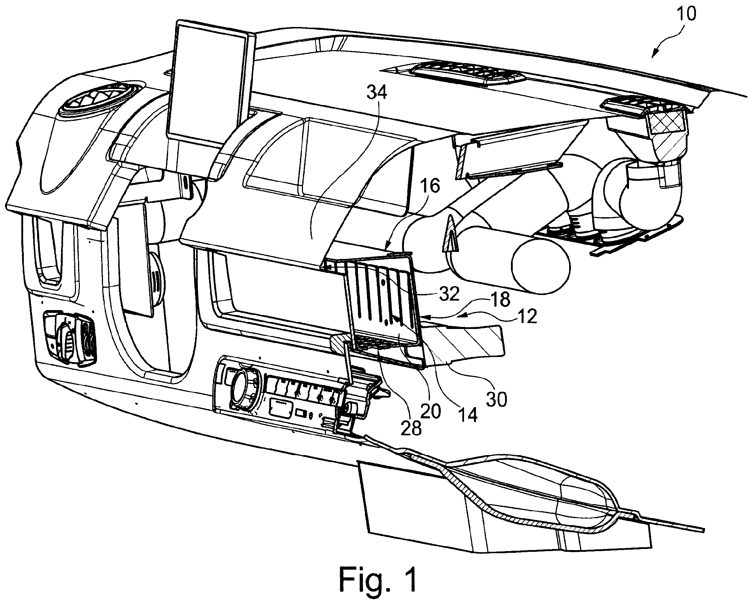

Fig. 1 zeigt in einer perspektivischen Schnittansicht ein Armaturenbrett 10 eines Kraftfahrzeugs. Dabei ist eine Luftfiltervorrichtung 12 einer Lüftungsanlage des Kraftfahrzeugs in einem Bauraum innerhalb des Armaturenbretts 10 zu erkennen. Die Luftfiltervorrichtung 12 weist dabei - hier nicht gezeigte - Islandmoose als natürliches, filterndes Medium auf, welche in einem Innenraum 14 eines Gehäuses 16 der Luftfiltervorrichtung 12 angeordnet sind. Die Islandmoose sind dabei beispielsweise dreifach komprimiert und können u. a. Feinstaubpartikel aus einem Luftstrom filtern, welcher von der Lüftungsanlage erzeugt wird und wenigstens teilweise durch den Innenraum 14 des Gehäuses 16 der Luftfiltervorrichtung 12 in den Innenraum des Kraftfahrzeugs strömt. Gleichzeitig können die Islandmoose auch eine Luftfeuchtigkeit des Luftstroms, welcher sie wenigstens teilweise durch- und/oder überströmt, regulieren. Bei einem trockenen Luftstrom kann Feuchtigkeit von den Islandmoosen an den Luftstrom abgegeben werden, während bei einem feuchten Luftstrom Feuchtigkeit von der Luft aufgenommen werden kann. Dadurch kann ein besonders angenehmes Raumklima im Innenraum des Kraftfahrzeugs erzeugt werden, in welchen der Luftstrom der Lüftungsanlage nach Durchströmen der Islandmoose eintritt.

Zum Befestigen der Islandmoose in dem Luftstrom der Lüftungsanlage weist die Luftfiltervorrichtung 12 eine Haltevorrichtung 18 auf, welche vorliegend auch das Gehäuseelement 36 umfasst. Die Haltevorrichtung 18 ist dabei dazu ausgebildet, die Islandmoose mittels eines Halteelements 20 lösbar an dem Kraftfahrzeug, im vorliegenden Fall im Armaturenbrett, in einem Luftstrom eines Luftkanals zu halten. Der Luftkanal wird im vorliegenden Fall wenigstens teilweise durch das Gehäuse 16 bzw. den Innenraum 14 definiert.

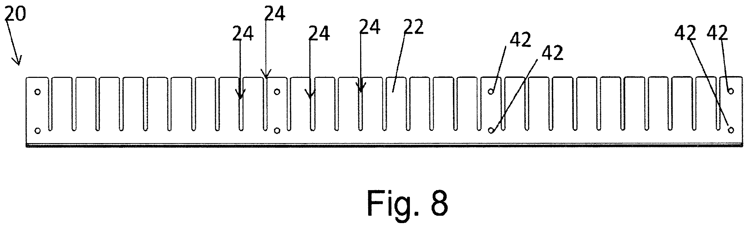

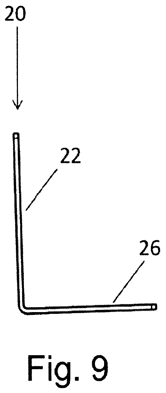

Weitere Details des Halteelements 20 sind besonders gut in den verschiedenen Ansichten der Fig. 8, 9 und 10 gezeigt. Das Halteelement 20 ist im vorliegenden Fall beispielsweise durch ein L-förmiges Blechbiegeteil gebildet, wie dies insbesondere in der Seitenansicht gemäß Fig. 9 zu erkennen ist. Ein Schenkel 22 des L-förmigen Halteelements 20 weist dabei eine Mehrzahl von Schlitzen 24 auf, welche im gezeigten Beispiel ca. 20 mm voneinander beabstandet sind und ca. 1 - 2 mm breit sind. In diesen Schlitzen 24 können jeweilige Islandflechten einfach mit ihrem jeweiligen Stämmchen oder einem anderen Pflanzenteil eingeklemmt werden. Dadurch sind die Islandmoose ausreichend sicher an dem Halteelement 20 und damit in dem Luftstrom der Lüftungsanlage befestigt. Die jeweiligen Schlitze 24 ermöglichen es dabei zudem, mehrere Islandmoospflanzen an einem Schlitz 24 zu befestigen. Dabei können die Pflanzen in einem Schlitz 24 gegeneinandergedrückt werden, um so die Islandmoose gegeneinander zu komprimieren. Dadurch kann bei gleichem Bauraumbedarf die Filterleistung erhöht werden.

Alternativ zu den Schlitzen 24 kann der Schenkel 22 des Halteelements 20 auch beispielsweise lediglich eine glatte Fläche aufweisen, an welcher ein Teppich von mehreren Islandmoosen beispielsweise mittels eines doppelseitigen Klebebands befestigt werden kann. Dieser Teppich kann beispielsweise aus einem Filzträger bestehen, auf welchem Islandmoose dreifach gegeneinander komprimiert aufgesteckt und/oder aufgeklebt sind. Eine andere Verbindungsmöglichkeit ist beispielsweise ein Klettverschluss, Druckknopfverbindungen oder ein Einklemmen jeweiliger Enden des Teppichs in zwei Schlitzen 24.

Die Islandmoose können so an dem Halteelement 20 leicht befestigt werden. Zusätzlich können die Islandmoose von dem Halteelement 20 wieder leicht entfernt werden, da sie lösbar mit diesem verbunden sind. Dadurch können die Islandmoose als natürliches, filterndes Medium der Luftfiltervorrichtung 12 einfach ausgetauscht werden, beispielsweise wenn deren maximale Lebensdauer erreicht ist und/oder wenn das filternde Medium zu stark verschmutzt ist, während das Halteelement 20 wieder verwendet werden kann.

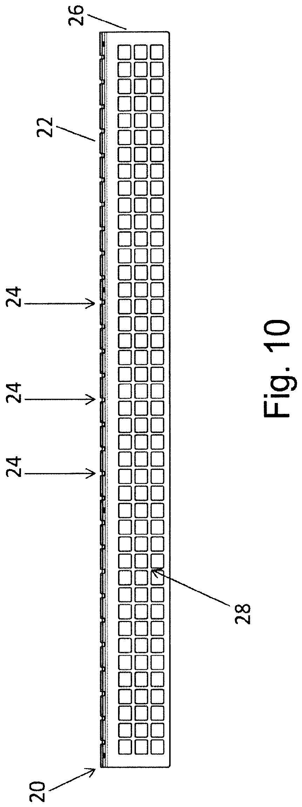

In der Draufsicht des Halteelements 20 gemäß Fig. 10 ist ein weiterer Schenkel 26 des L-förmigen Halteelements 20 zu erkennen. Dieser Schenkel 26 weist wenigstens bereichsweise einen Gitterbereich 28 auf, welcher ein Durchströmen des Halteelements 20 in diesem Bereich mit einem Luftstrom ermöglicht. Entsprechend der L-Form des Halteelements 20 sind jeweilige an dem Schenkel 22 gehaltene Islandmoose, welche in einem Innenwinkel des L-förmigen Halteelements 20 angeordnet sind, besonders gut in einem Luftstrom der Lüftungsanlage angeordnet. Vorzugsweise werden die Islandmoose also in einem durch das L-förmige Halteelement 20 gebildeten Innenwinkel angeordnet.

Der Luftstrom der Lüftungsanlage kann beispielsweise mittels des Motors des Kraftfahrzeugs erzeugt werden. Der Luftstrom kann dabei über jeweilige Lüftungskanäle und über einen Klappenkasten in Lufteinlässe 30 des Gehäuses 16, welche auch als Lufteinlassöffnungen 30 des Gehäuses 16 bezeichnet werden können, und damit in dessen Innenraum 14 eingeleitet werden, um so die jeweiligen darin gehaltenen Islandmoose zu durchströmen. Entsprechend kommt es zu einer Filterung des Luftstroms, insbesondere können Islandmoose jeweilige Feinstaubpartikel aus der Luft an sich binden.

Die Lufteinlässe 30 münden dabei vorzugsweise in besonders breite Öffnungen in dem Gehäuse 16 und sind über eine Längserstreckung entlang dessen Seite verteilt, um eine möglichst gleichmäßige Durchströmung des Innenraums 14 des Gehäuses 16 mit großem Luftstromquerschnitt zu erreichen. Dadurch kann die Lüftungsanlage hier besonders leise sein. Zusätzlich werden Geräusche auch durch die Islandmoose gedämpft, insbesondere da diese auch Turbulenzen im Luftstrom reduzieren können. Außerdem dämpfen die Islandmoose auch Schwingungen anderer Teile der Lüftungsanlage wie beispielsweise des Gehäuses 16, welche durch den Luftstrom und auch eine Fahrzeugbewegung angeregt werden können.

Der Gitterbereich 28 ist vorzugsweise zwischen den Lufteinlässe 30 und den durch das Halteelement 20 gehaltenen Islandmoosen angeordnet, was eine gleichmäßige Durchströmung der Islandmoose fördern kann.

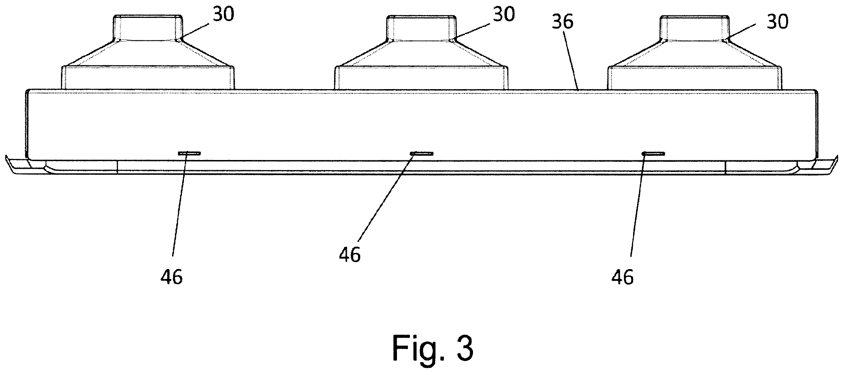

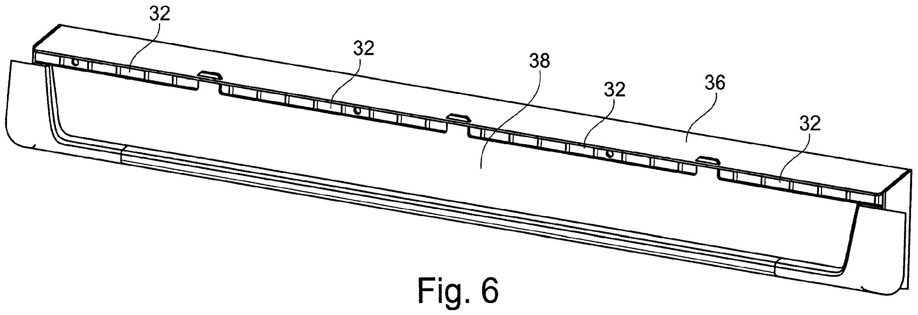

Austreten kann der Luftstrom der Lüftungsanlage in den Innenraum des Kraftfahrzeugs nach Passieren der Islandmoose als natürliches, filterndes Medium über jeweilige Schlitze 32 in dem Gehäuse 16. Die Lufteinlässe 30 sind dabei besonders gut in der Draufsicht des Gehäuses 16 in Fig. 3 zu erkennen und die Schlitze 32 als Luftauslässe 32 des Gehäuses 16 besonders gut in der Perspektivansicht des Gehäuses 16 gemäß Fig. 6. Die Schlitze 32 sind dabei für jeweilige Insassen des Kraftfahrzeugs mittels eines Verkleidungselements 34 des Armaturenbretts 10 kaschiert. Gleichzeitig verhindert dieses Verkleidungselement 34, dass Fremdkörper durch den Schlitz 32 in den Innenraum 14 des Gehäuses 16 eintreten können.

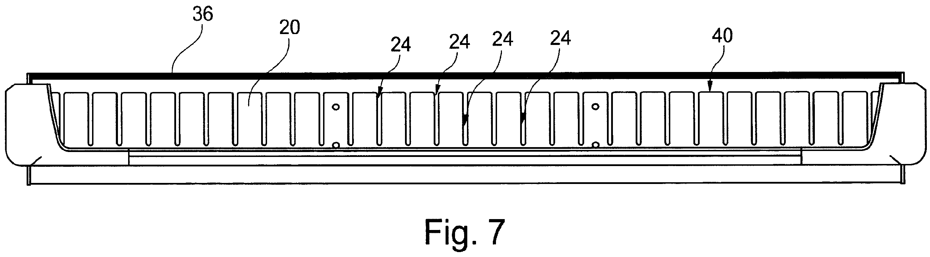

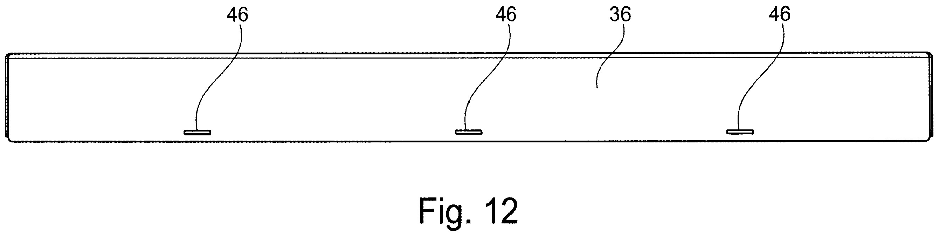

Im vorliegenden Beispiel umfasst das Gehäuse 16 die Lufteinlässe 30, ein Gehäuseelement 36 und ein transparentes Abdeckelement 38, welches in das Gehäuseelement 36 zum Bilden des im Wesentlichen geschlossenen Gehäuses 16 eingesteckt ist. Das Gehäuseelement 36 hat dabei an einer in Einbaulage dem Innenraum des Kraftfahrzeugs zugewandten Seite eine Zugriffsöffnung 40, welche durch das angesteckte Abdeckelement 38 im Wesentlichen verschlossen ist und welche beispielsweise in der Darstellung gemäß Fig. 7, in der das Abdeckelement 38 nicht gezeigt ist, gut zu erkennen ist. Jeweilige Aufnahmeöffnungen 46 für ein Einstecken des Abdeckelements 38 in der Zugriffsöffnung 40 des Gehäuseelements 36 sind in der Draufsicht des Gehäuseelements 36 gemäß Fig. 12 zu erkennen. Mittels der Zugriffsöffnung 40 können bei Abnehmen des Abdeckelements 38 beispielsweise jeweilige Islandmoose und/oder das Halteelement 20 direkt aus dem Innenraum 14 des Gehäuses 16 entnommen werden. Dadurch ist es nicht notwendig, das gesamte Gehäuse 16 zur Wartung des Filters der Luftfiltervorrichtung 12 auszubauen und/oder zu demontieren. Das Halteelement 20 kann werkzeuglos im Gehäuseelement 36 montierbar und/oder demontierbar sein.

Das Abdeckelement 38 ist vorzugsweise transparent ausgebildet, um die Islandmoose in dem Gehäuse 16 von innerhalb des Innenraums des Kraftfahrzeugs sehen zu können. Beispielsweise ist das Abdeckelement 38 als Plexiglasscheibe ausgebildet. Dadurch ist es leicht möglich, optisch zu kontrollieren, ob ein Austausch der Islandmoose notwendig ist. Ein Austausch der Islandmoose kann beispielsweise aufgrund natürlicher biologischer Prozesse notwendig werden oder weil die Islandmoose ihre maximale Aufnahmekapazität für aus der Luft gefilterte Partikel erreicht haben. Zudem kann so ein natürlich anmutendes Ambiente im Innenraum des Kraftfahrzeugs geschaffen werden. Dabei kann auch eine Beleuchtungsvorrichtung im Innenraum 14 des Gehäuses 16 angeordnet sein, durch welche beispielsweise mittels LED-Leuchtmitteln, deren Spektralverteilung und/oder Helligkeit einstellbar sein kann, eine Ambientenbeleuchtung in dem Innenraum des Kraftfahrzeugs geschaffen werden kann.

Das Abdeckelement 38 ist beispielsweise mit dem Gehäuseelement 36 mittels einer Schnappverbindung verbunden. Dadurch kann das Abdeckelement 38 leicht von dem Gehäuseelement 36 gelöst werden.

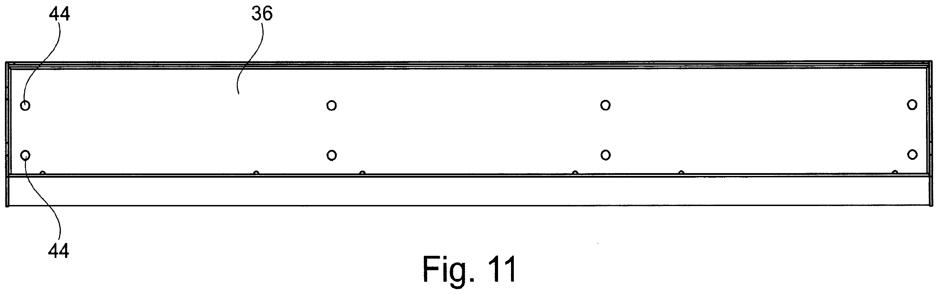

Das Halteelement 20 ist ebenfalls lösbar mit dem Gehäuseelement 36 verbunden. Für eine besonders einfach lösbare Verbindung kann das Halteelement 20 ebenfalls beispielsweise mittels einer Steckverbindung mit dem Gehäuseelement 36 verbunden sein. Alternativ kann das Halteelement 20 beispielsweise auch mit dem Gehäuseelement 36 verschraubt sein, beispielsweise mittels der Schraublöcher 42. Das Gehäuseelement 36 kann dafür auch korrespondierende Schraublöcher 44 aufweisen, welche beispielsweise in der Vorderansicht des Gehäuseelements 36 gemäß Fig. 11 gezeigt sind. Dadurch dass das Halteelement 20 mit dem Gehäuseelement 36 lösbar verbunden ist, können alle Islandmoose gemeinsam mit dem Halteelement 20 zu Austausch- und Wartungszwecken aus dem Innenraum 14 des Gehäuses 16 schnell und einfach entnommen werden. Eine solche Entnahme kann beispielsweise auch bei demontierten Abdeckelementen 38 durch die Zugriffsöffnung 40 erfolgen, ohne dass weitere Teile der Luftfiltervorrichtung 12 demontiert werden müssen. Die Islandmoose mit dem Halteelement 20 können so als einheitliche Filterpatrone betrachtet werden, welche einfach insgesamt ausgetauscht werden kann. Die Islandmoose können dann anschließend von dem Halteelement 20 einfach gelöst werden, um diese zu entsorgen. Da es sich um eine natürliche Pflanze handelt, kann diese beispielsweise einfach kompostiert werden. Das Halteelement 20 kann dann mit neuen Islandmoosen bestückt werden und entsprechend wiederverwendet werden.

Alternativ oder zusätzlich kann auch das Gehäuse 16 lösbar an dem Armaturenbrett 10 bzw. der Lüftungsanlage des Kraftfahrzeugs befestigt sein. Dann kann das gesamte Gehäuse 16 in der Art einer Patrone ausgetauscht werden, falls ein Austausch der Islandmoose notwendig ist. Dadurch kann ein solcher Austausch besonders einfach sein und zudem jeweilige Verschmutzungen des Innenraums des Kraftfahrzeugs durch sich gegebenenfalls lösende Islandmoose und/oder sich gegebenenfalls lösende gefilterte Partikel von den Islandmoosen aufgrund einer Bewegung vermieden werden. Bei einem solchen Austausch können beispielsweise jeweilige Lufteinlässe 30 auch in dem Kraftfahrzeug verbleiben, um nicht gemeinsam mit dem restlichen Gehäuse 16 ausgetauscht zu werden.

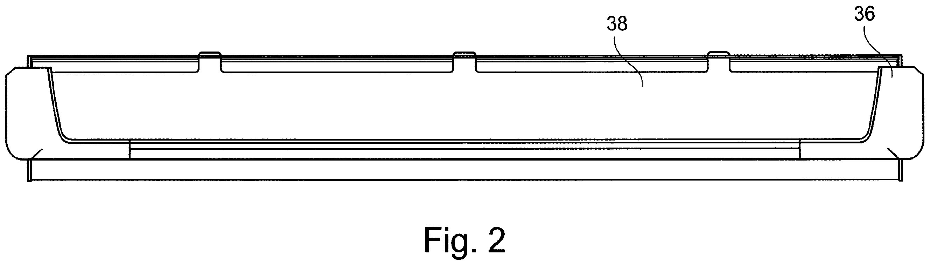

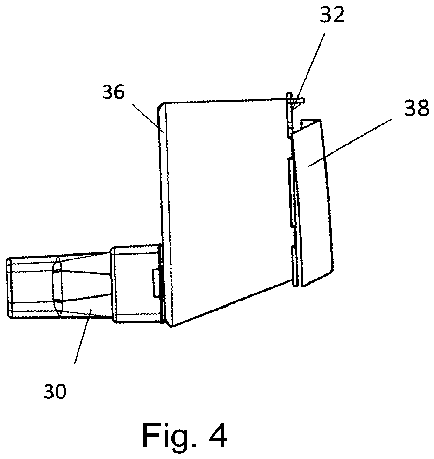

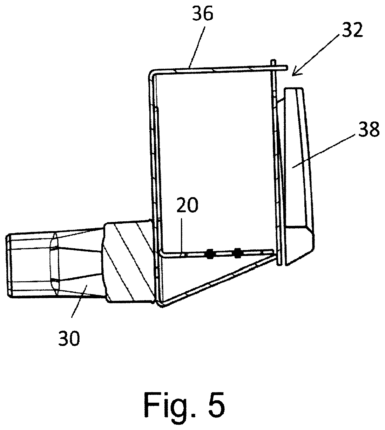

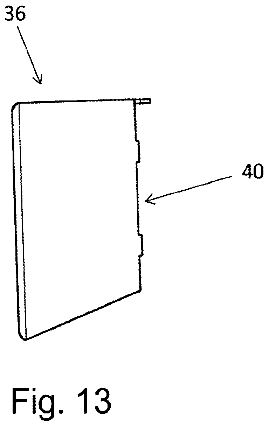

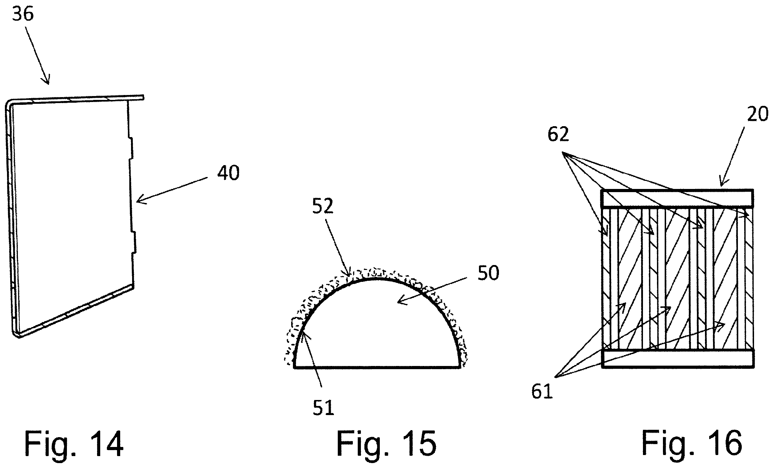

Fig. 4 zeigt zur weiteren Veranschaulichung des Gehäuses 16 eine Seitenansicht davon, während Fig. 5 eine seitliche Schnittansicht des Gehäuses 16 entlang der in Fig. 2 eingetragenen Linie A-A zeigt. Fig. 13 zeigt zur weiteren Veranschaulichung des Gehäuseelements 36 eine Seitenansicht davon und in Fig. 14 eine seitliche Schnittansicht gemäß der in Fig. 11 eingezeichneten Linie B-B.

Im vorliegenden Beispiel weist das Halteelement 20 eine Breite entlang seiner Längserstreckung quer zu den Schlitzen 24 von vorzugsweise 200 mm bis 1000 mm, stärker bevorzugt 600 mm bis 800 mm (hier 781 mm) auf. Das Gehäuseelement 36 weist in der entsprechenden Richtung eine Breite von vorzugsweise 200 mm bis 1000 mm, stärker bevorzugt 600 mm bis 800 mm (hier 789 mm) auf und eine Höhe gemäß der Vorderansicht von Fig. 11 von vorzugsweise 80 mm bis 140 mm, stärker bevorzugt 90 mm bis 130 mm (hier 115) mm auf. Eine Tiefe des Gehäuseelements 36, welche beispielsweise in deren Draufsicht gemäß Fig. 12 zu erkennen ist, beträgt vorzugsweise 40 bis 100 mm, stärker bevorzugt 60 bis 80 mm (hier 70 mm). Das Gehäuse 16 weist hierzu korrelierend eine Gesamtbreite von vorzugsweise 200 bis 1000 mm, stärker bevorzugt 650 bis 900 mm (hier 828 mm) und eine bevorzugte Höhe der Zugriffsöffnung 40 und damit des einsehbaren Bereichs von vorzugsweise 40 bis 100 mm, stärker bevorzugt 60 bis 80 mm (hier 85 mm) auf, gemäß der Vorderansicht von Fig. 2. Die Lufteinlässe 30 weisen eine Breite von vorzugsweise 130 bis 200 mm (hier 172 mm) auf, wobei die Breite in der Ansicht nach Fig. 3 gezeigt ist. Ein Abstand zu einer Seitenkante des Gehäuseelements 36 der äußeren Lufteinlässe 30 beträgt dabei vorzugsweise 20 bis 50 mm (hier 35 mm) und ein Abstand zwischen dem mittleren Lufteinlass 30 und den äußeren Lufteinlässen 30 jeweils vorzugsweise 80 bis 120 mm (hier 100,4 mm). Das Gehäuseelement 36 weist in Einbaulage an seiner Unterseite vorzugsweise einen Innenwinkel von 50° bis 80°, stärker bevorzugt von 60° bis 75° (hier ca. 70°) auf. Dadurch wird der über die Lufteinlässe 30 im Wesentlichen horizontal eingeleitete Luftstrom nach oben abgelenkt und durchströmt somit den Gitterbereich 28 des Schenkels 26 des Halteelements 20 und damit anschließend die Islandmoose als natürliches, filterndes Medium. Dieser Winkel ist insbesondere in der Seitenansicht gemäß Fig. 4 zu erkennen. Anschließend strömt die Luft, wie bereits beschrieben, durch die Schlitze 32 zwischen dem Abdeckelement 38 und dem Gehäuseelement 36 unter dem Verkleidungselement 34 aus dem Gehäuse 16 in den Innenraum des Kraftfahrzeugs.

Fig. 15 zeigt ein dreidimensionales Substrat 50. Ein solches Substrat 50 kann anstelle des und/oder als das beschriebene Halteelement verwendet oder auf einem solchen Halteelement befestigt werden. Wie in Fig. 15 erkennbar, können auf einer dreidimensionalen Außenfläche 51 des Substrats 50 eine oder mehrere mit dem Bezugszeichen 52 angedeutete Moos- und/oder Flechtenpflanzen befestigt sein. Die Außenfläche 51 des Substrats 50 kann dabei gebogen und/oder rund sein. Sie kann z.B. einen Abschnitt eines Zylindermantels bilden (Fig. 15 zeigt beispielhaft einen Abschnitt, der sich über 180° erstreckt).

Fig. 16 zeigt ein Halteelement 20, das mehrere Lamellen 61 aufweist. Die Lamellen 61 umfassen jeweils ein Substrat, auf dem eine oder mehrere Moos- und/oder Flechtenpflanzen befestigt sind. Das Substrat ist plattenförmig und kann luftdurchlässig sein, um eine Umströmung und/oder Durchströmung des Substrats und der darauf angeordneten Moos- und/oder Flechtenpflanzen zu ermöglichen. Zwischen den Lamellen 61 können ein oder mehrere Trennelemente 62 angeordnet sein. Die Trennelemente 62 weisen Aktivkohle und/oder ein Filterpapier auf. Wie gezeigt, kann das Halteelement 20 in diesem Fall einen Halterahmen für die Lamellen 61 und/oder die Trennelemente 62 bilden. Die Lamellen 61 und/oder die Trennelemente 62 können auf zwei gegenüberliegenden Seiten am Halteelement 20 befestigt sein. Eine solche Luftfiltervorrichtung kann z.B. an Stelle eines herkömmlichen Filters verwendet und an dessen Position im Luftkanal angeordnet werden.

### Bezugszeichenliste

- 10: Armaturenbrett
- 12: Luftfiltervorrichtung
- 14: Innenraum
- 16: Gehäuse
- 18: Haltevorrichtung
- 20: Halteelement
- 22: Schenkel
- 24: Schlitz
- 26: Schenkel
- 28: Gitterbereich
- 30: Lufteinlass
- 32: Schlitz
- 34: Verkleidungselement
- 36: Gehäuseelement
- 38: Abdeckelement
- 40: Zugriffsöffnung
- 42: Schraublöcher
- 44: Schraublöcher
- 46: Aufnahmeöffnungen
- 50: Substrat
- 51: Außenfläche
- 52: Moos und/oder Flechte
- 61: Lamelle
- 62: Trennelement

## Patentansprüche

1. Lüftungsanlage für einen Innenraum eines Kraftfahrzeugs mit mindestens einem Luftkanal und mit mindestens einer Luftfiltervorrichtung (12), wobei die Luftfiltervorrichtung (12) wenigstens eine Haltevorrichtung (18) mit wenigstens einem Halteelement (20) umfasst, wobei die Haltevorrichtung (18) dazu ausgebildet ist, das Halteelement (20) lösbar an dem Kraftfahrzeug zu befestigen,
**dadurch gekennzeichnet, dass** die Luftfiltervorrichtung (12) wenigstens eine Flechte und/oder ein Moos als natürliches, filterndes Medium aufweist und das filternde Medium mittels des Halteelements (20) wenigstens teilweise in einem Luftstrom des Luftkanals gehalten ist.

2. Lüftungsanlage nach Anspruch 1, wobei
das Haltelement (20) wenigstens einen Schlitz (24) aufweist, in welchem ein Teilbereich der Flechte und/oder des Mooses gehalten ist, wobei insbesondere jeweilige Schlitze (24) des Halteelements (20) konisch zulaufend oder gerade sind.

3. Lüftungsanlage nach einem der Ansprüche 1 oder 2, wobei
die Haltevorrichtung (18), insbesondere wenigstens ein Teil des Halteelements (20), wenigstens einen Teil einer Wandung des Luftkanals der Lüftungsanlage bildet.

4. Lüftungsanlage nach Anspruch 3, wobei
die Haltevorrichtung (18) dazu ausgebildet ist, wenigstens einen Teil eines Luftauslasses der Lüftungsanlage in dem Innenraum des Kraftfahrzeugs zu bilden.

5. Lüftungsanlage nach einem der vorherigen Ansprüche, wobei
die Haltevorrichtung (18) ein im Wesentlichen geschlossenes Gehäuse (16) für das filternde Medium bildet, welches wenigstens eine Lufteinlassöffnung (30) und eine Luftauslassöffnung (32) aufweist.

6. Lüftungsanlage nach Anspruch 5, wobei
die Haltevorrichtung (18) wenigstens ein Gehäuseelement (36) und ein transparentes und/oder transluzentes Abdeckelement (38) umfasst, welche jeweils wenigstens einen Teil des Gehäuses (16) für das Moos bilden.

7. Lüftungsanlage nach einem der Ansprüche 5 oder 6, wobei
das Haltelement (20) lösbar oder fixiert in oder an dem Gehäuse (16) befestigt ist, insbesondere indem das Halteelement (20) lösbar mit dem Gehäuseelement (36) und/oder dem Abdeckelement (38) verbunden ist, und/oder das Gehäuse (16) lösbar mit anderen Teilen der Lüftungsanlage, insbesondere dem Luftkanal, verbunden ist und/oder dazu ausgebildet ist, lösbar mit dem Kraftfahrzeug verbunden zu sein.

8. Lüftungsanlage nach einem der Ansprüche 6 oder 7, wobei
die Luftauslassöffnung (32) des Gehäuses (16) als Schlitz (32) zwischen dem Gehäuseelement (36) und dem Abdeckelement (38) und/oder zwischen dem Haltelement (20) und dem Gehäuseelement (36) und/oder dem Abdeckelement (38) ausgebildet ist.

9. Lüftungsanlage nach einem der Ansprüche 6 bis 8, wobei
das transparente und/oder transluzente Abdeckelement (38) wenigstens einen Teil einer in Einbaulage der Lüftungsanlage dem Innenraum zugewandten Fläche des Gehäuses (16) bildet.

10. Lüftungsanlage nach einem der vorherigen Ansprüche, wobei
das Halteelement (20) als längliches Element mit V-förmigen Querschnitt ausgebildet ist, wobei das Moos und/oder die Flechte wenigstens teilweise in dem durch die V-Form gebildeten Innenwinkel angeordnet ist.

11. Lüftungsanlage nach Anspruch 10, wobei
das Halteelement (20) in einem Schenkel (22) der V-Form jeweilige Schlitze (24) zum Halten des Mooses und/oder der Flechte aufweist und in einem anderen Schenkel (26) der V-Form wenigstens eine Durchgangsöffnung (28) zum Durchströmen eines Luftstroms durch das Moos und/oder die Flechte aufweist.

12. Lüftungsanlage nach einem der vorherigen Ansprüche, wobei
das natürliche, filternde Medium ein Islandmoos umfasst, insbesondere cladonia rangiferina.

13. Lüftungsanlage nach einem der vorherigen Ansprüche, wobei
das Moos stromabwärts eines Klappenkastens der Lüftungsanlage und/oder stromabwärts eines zusätzlichen konventionellen Luftfilters angeordnet ist.

14. Lüftungsanlage nach einem der vorherigen Ansprüche, wobei
die Haltevorrichtung (18) eine Beleuchtungsvorrichtung umfasst, wobei die Beleuchtungsvorrichtung insbesondere ein LED-Leuchtmittel umfasst.

15. Kraftfahrzeug mit einer Lüftungsanlage gemäß einem der Ansprüche 1 bis 14, wobei das Halteelement (20) mittels der Haltevorrichtung (18) lösbar an dem Kraftfahrzeug befestigt ist und wobei das natürliche, filternde Medium mittels des Halteelements (20) wenigstens teilweise in einem Luftstrom des Luftkanals gehalten ist.

## Claims

1. Ventilation system for an interior of a motor vehicle, having at least one air duct and at least one air filtration device (12), the air filtration device (12) comprising at least one holding device (18) having at least one holding element (20), the holding device (18) being configured to fasten the holding element (20) detachably on the motor vehicle,
**characterised in that** the air filtration device (12) has at least a lichen and/or a moss as a natural filtration medium, and the filtration medium is held at least in part in an airflow of the air duct by means of the holding element (20).

2. Ventilation system according to claim 1, wherein
the holding element (20) has at least one slit (24) in which a sub-region of the lichen and/or moss is held, in particular associated slits (24) of the holding element (20) being conically convergent or straight.

3. Ventilation system according to either claim 1 or claim 2, wherein
the holding device (18), in particular at least part of the holding element (20), forms at least part of the wall of the air duct of the ventilation system.

4. Ventilation system according to claim 3, wherein
the holding device (18) is configured to form at least part of an air outlet of the ventilation system in the interior of the motor vehicle.

5. Ventilation system according to any of the preceding claims, wherein
the holding device (18) forms a substantially closed housing (16) for the filtration medium, which has at least an air inlet opening (30) and an air outlet opening (32).

6. Ventilation system according to claim 5, wherein
the holding device (18) comprises at least a housing element (36) and a transparent and/or translucent cover element (38), which each form at least part of the housing (16) for the moss.

7. Ventilation system according to either claim 5 or claim 6, wherein
the holding element (20) is detachably or fixedly fastened in or on the housing (16), in particular by detachably connecting the holding element (20) to the housing element (36) and/or to the cover element (38), and/or the housing (16) is detachably connected to other parts of the ventilation system, in particular the air duct, and/or configured to be detachably connected to the motor vehicle.

8. Ventilation system according to either claim 6 or claim 7, wherein
the air outlet opening (32) of the housing (16) is formed as a slit (32) between the housing element (36) and the cover element (38) and/or between the holding element (20) and the housing element (36) and/or the cover element (38).

9. Ventilation system according to any of claims 6 to 8, wherein
the transparent and/or translucent cover element (38) forms at least part of a face of the housing (16) which faces the interior when the ventilation system is in the installation position.

10. Ventilation system according to any of the preceding claims, wherein
the holding element (20) is formed as an elongate element having a V-shaped cross section, the moss and/or lichen being arranged at least in part in the internal angle formed by the V shape.

11. Ventilation system according to claim 10, wherein
the holding element (20) has associated slits (24) in a limb (22) of the V shape, for holding the moss and/or lichen, and at least one through-opening (28) in another limb (26) of the V shape, for passing an airflow through the moss and/or lichen.

12. Ventilation system according to any of the preceding claims, wherein
the natural filtration medium comprises an Iceland moss, in particular *Cladonia rangiferina.*

13. Ventilation system according to any of the preceding claims, wherein
the moss is arranged downstream from a flap box of the ventilation system and/or downstream from an additional conventional air filter.

14. Ventilation system according to any of the preceding claims, wherein
the holding device (18) comprises a lighting device, the lighting device comprises in particular an LED light source.

15. Motor vehicle comprising a ventilation system according to any of claims 1 to 14,
wherein the holding element (20) is detachably fastened on the motor vehicle by means of the holding device (18) and wherein the natural filtration medium is held at least in part in an airflow of the air duct by means of the holding element (20) .

## Revendications

1. Installation de ventilation pour un habitacle d'un véhicule automobile comprenant au moins un conduit d'air et au moins un dispositif de filtre à air (12), le dispositif de filtre à air (12) comprenant au moins un dispositif de maintien (18) doté d'au moins un élément de maintien (20), le dispositif de maintien (18) étant conçu pour fixer l'élément de maintien (20) au véhicule de manière libérable,
**caractérisée en ce que** le dispositif de filtre à air (12) comporte au moins un lichen et/ou une mousse comme milieu filtrant naturel et le milieu filtrant est maintenu au moins en partie dans un écoulement d'air du conduit d'air au moyen de l'élément de maintien (20).

2. Installation de ventilation selon la revendication 1, dans laquelle
l'élément de maintien (20) comporte au moins une fente (24), dans laquelle une partie du lichen et/ou de la mousse est maintenue, des fentes (24) respectives de l'élément de maintien (20) étant en particulier droites ou effilées.

3. Installation de ventilation selon l'une des revendications 1 ou 2, dans laquelle
le dispositif de maintien (18), en particulier au moins une partie de l'élément de maintien (20), forme au moins une partie d'une paroi du conduit d'air de l'installation de ventilation.

4. Installation de ventilation selon la revendication 3, dans laquelle
le dispositif de maintien (18) est conçu pour former au moins une partie d'une sortie d'air de l'installation de ventilation dans l'habitacle du véhicule automobile.

5. Installation de ventilation selon l'une selon l'une des revendications précédentes, dans laquelle
le dispositif de maintien (18) forme un boîtier (16) sensiblement fermé pour le milieu filtrant, qui comporte au moins une ouverture d'entrée d'air (30) et une ouverture de sortie d'air (32).

6. Installation de ventilation selon la revendication 5, dans laquelle
le dispositif de maintien (18) comprend au moins un élément de boîtier (36) et un élément de recouvrement (38) transparent et/ou translucide, qui forment respectivement au moins une partie du boîtier (16) pour la mousse.

7. Installation de ventilation selon l'une des revendications 5 ou 6, dans laquelle
l'élément de maintien (20) est fixé de manière libérable ou fixement dans ou sur le boîtier (16), en particulier par le fait que l'élément de maintien (20) est relié de manière libérable à l'élément de boîtier (36) et/ou à l'élément de recouvrement (38), et/ou le boîtier (16) est relié de manière libérable à d'autres parties de l'installation de ventilation, en particulier le conduit d'air, et/ou est conçu pour être relié de manière libérable au véhicule automobile.

8. Installation de ventilation selon l'une des revendications 6 ou 7, dans laquelle
l'ouverture de sortie d'air (32) du boîtier (16) est réalisée sous la forme d'une fente (32) entre l'élément de boîtier (36) et l'élément de recouvrement (38) et/ou entre l'élément de maintien (20) et l'élément de boîtier (36) et/ou l'élément de de recouvrement (38).

9. Installation de ventilation selon l'une des revendications 6 à 8, dans laquelle
l'élément de recouvrement (38) transparent et/ou translucide forme au moins une partie d'une surface du boîtier (16) orientée vers l'habitacle dans la position de montage de l'installation de ventilation.

10. Installation de ventilation selon l'une des revendications précédentes, dans laquelle
l'élément de maintien (20) est réalisé sous la forme d'un élément allongé avec une section transversale en forme de V, la mousse et/ou le lichen étant disposés au moins en partie dans l'angle intérieur formé par la forme en V.

11. Installation de ventilation selon la revendication 10, dans laquelle
l'élément de maintien (20) comporte, dans une branche (22) de la forme en V, des fentes (24) respectives pour maintenir la mousse et/ou le lichen et, dans une autre branche (26) de la forme en V, au moins une ouverture de passage (28) pour le passage d'un écoulement d'air à travers la mousse et/ou le lichen.

12. Installation de ventilation selon l'une des revendications précédentes, dans laquelle
le milieu filtrant naturel comprend une mousse d'Islande, en particulier Cladonia rangiferina.

13. Installation de ventilation selon l'une des revendications précédentes, dans laquelle
la mousse est disposée en aval d'une boîte à clapets de l'installation de ventilation et/ou en aval d'un filtre à air conventionnel supplémentaire.

14. Installation de ventilation selon l'une des revendications précédentes, dans laquelle
le dispositif de maintien (18) comprend un dispositif d'éclairage, le dispositif d'éclairage comprenant en particulier un moyen d'éclairage à DEL.

15. Véhicule automobile comprenant une installation de ventilation selon l'une des revendications 1 à 14, dans lequel l'élément de maintien (20) est fixé au véhicule automobile de manière libérable au moyen du dispositif de maintien (18) et dans lequel le milieu filtrant naturel est maintenu au moins en partie dans un écoulement d'air du conduit d'air au moyen de l'élément de maintien (20).
